(19) Europäisches Patentamt

European Patent Office

Office européen des brevets

(11) **EP 2 065 689 A1**

(12) **EUROPEAN PATENT APPLICATION**

(43) Date of publication:
**03.06.2009 Bulletin 2009/23**

(51) Int Cl.:
*G01G 19/08* [(2006.01)]   *G01M 1/12* [(2006.01)]

(21) Application number: **07425757.7**

(22) Date of filing: **28.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Iveco S.p.A.**
**10156 Torino (IT)**

(72) Inventor: **Fisanotti, Giovanni**
**10014 Caluso (IT)**

(74) Representative: **Cinquantini, Bruno et al**
**Notarbartolo & Gervasi S.p.A.**
**Corso di Porta Vittoria, 9**
**20122 Milano (IT)**

(54) **Method and device for detecting the overload of a vehicle, in particular a commercial or industrial vehicle**

(57)    Method and device for detecting the overload of a vehicle based on the measuring of the position of its barycenter along its longitudinal axis, so that when the barycenter of the vehicle falls outside a predetermined interval of values, the driver is alerted of the dangerous situation.

**Fig. 1**

EP 2 065 689 A1

**Description**

Field of the invention

This invention relates to a method and device for detecting the overload of a vehicle, in particular a commercial or industrial vehicle.

Description of the prior art

The condition of overloading of a vehicle, in particular of a heavy vehicle, generates an important problem deriving from the increasing of the braking and stopping distances which depend on the weight.

The law provides that the police continually control that the whole vehicle and its single axles do not exceed the maximum permissible weight. So, in order to avoid to get a fine, it is particularly important to not exceed the weight limits.

According to another aspect of the problem, the overloading of a vehicle stresses and consequently damages the braking and the suspension system, which results in an increase of the costs for the replacement of the damaged components.

A further problem generated by the overloading of a vehicle is the considerable damaging of the road surface.

In particular, a truck travelling at a high speed transmits a vertical load that is proportional to the speed, moreover, when the truck takes a bend, the road surface is subject to considerable tangential stresses, that are proportional to the centripetal force. For this reason, there are precise law limits determining the maximum permissible load on the axles of the vehicles. These limits are, however, not much observed, because so far the only way to verify the weight of a truck at its axle shaft, or the overall weight of the truck itself, is to physically bring the vehicle on a weighing machine and measure its weight.

On the other hand, it is expensive and complicated to prepare reliable and robust loading cells with the function to measure the load in the truck.

Summary of the invention

The purpose of this invention is to provide a method for detecting the overload of a vehicle.

Therefore, the aim of this invention is to achieve the purposes explained above by means of a method for detecting the overload of a heavy vehicle, according to claim 1.

A further purpose of this invention is to provide a device for detecting the overload of a vehicle.

Therefore, the aim of this invention is to achieve the purposes explained above by means of a device for detecting the overload of a heavy vehicle, according to claim 7.

According to another aspect of the invention, said device finds further use when it is equipped with means for the storage of the events in which a vehicle has run carrying a load that exceeds the nominal value.

The dependent claims describe the preferred embodiments of the invention.

Brief description of the Figures

Further characteristics and advantages of the invention will be more apparent in light of a detailed description of a preferred, but non-exclusive, embodiment of a device for detecting the overload of a vehicle, shown with the help of the drawings that are attached hereto, which are merely illustrative and not limitative, in which:

- Fig. 1 shows the model of a vehicle according to an isostatic scheme of the beam hinged to two trolleys A and B;
- Fig. 2 shows a logic-functional diagram of the device for detecting the overload of a vehicle.

Detailed description of a preferred embodiment of the invention

The known technique allows the detection of the longitudinal position Xc of the barycenter of the vehicle on the basis of the wheel slipping.

Since the geometry of a vehicle usually does not allow the uniform distribution of the load along its whole longitudinal axis, a possible overload makes the position of the barycenter Xc fall outside an interval which may be obtained empirically making various loading experiments.

Therefore a method for detecting the overload of a vehicle, according to this invention comprises the following steps:

- definition of a finite interval of values within which the position of the barycenter of a vehicle has to fall along its longitudinal axis, in various admissible load conditions;

- detection of the position Xc of the barycenter along the longitudinal axis;
- if Xc falls within said interval, the vehicle is not overloaded, otherwise the vehicle is overloaded. In a first preferred alternative embodiment of said method, said interval is empirically derived by loading the vehicle in all varied and admissible ways.

In a second preferred alternative embodiment of said method, applied to a vehicle with two axles A and B, the interval of values in which Xc has to fall when the vehicle is in admissible load conditions is determined analytically.

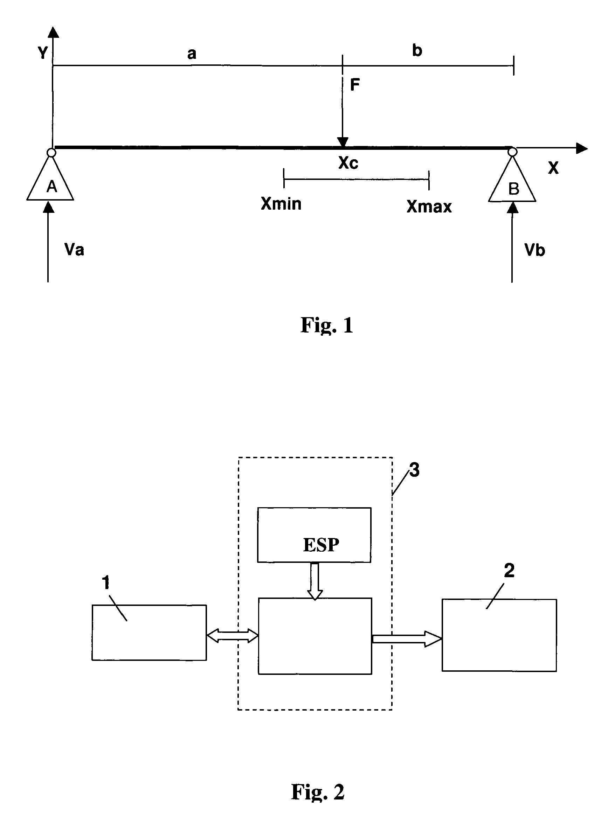

As shown in figure 1, a vehicle, due to its symmetry along the longitudinal axis, may be compared to a beam put on two trolleys A and B, which represent the axles of the vehicle.

For reasons of simplicity, said longitudinal axis is made to coincide with the X axis of a Cartesian coordinate system associated to the model of a vehicle.

A force F, which vectorially represents the weight of a vehicle with a full load, is applied vertically on the barycenter of the vehicle.

The constraining reactions $V^a$ and $V^b$ are equal to:

$$V^a = \frac{F \cdot b}{a+b} \qquad \text{and} \qquad V^b = \frac{F \cdot a}{a+b}$$

for the equilibrium to the rotation, where a represents the distance Xc from the trolley A and b represents the distance Xc from the trolley B and a+b represents the known wheel base of the vehicle.

The arms a and b can be derived from said formulas:

$$\begin{cases} a = \dfrac{V^a(a+b)}{F} \\ b = \dfrac{V^b(a+b)}{F} \end{cases}$$

Given the values $a_{max}$, $a_{min}$, $b_{max}$, $b_{min}$, $V^a_{max}$, $V^a_{min}$, $V^b_{max}$, $V^b_{min}$ as maximum and minimum admissible values for the respective magnitudes, it follows that:

$$\begin{cases} a_{min/\,max} = \dfrac{V^a_{min/\,max}(a+b)}{F} \\ b_{min/\,max} = \dfrac{V^b_{min/\,max}(a+b)}{F} \end{cases}$$

Therefore, when the value of a is higher than $a_{max}$ it means that the constraining reaction $V^a$ in A is higher than $V^a_{max}$ and so it means that the maximum load value in the axle A has been exceeded, the same applies for axle B. So, a possible overload makes Xc fall outside the finite interval [$b_{max}$, $a_{max}$], therefore the overload of only one axle indicates that the whole vehicle has been overloaded.

In view of what explained above, in a preferred method for detecting the overload of a vehicle said interval of values which within Xc has to fall in order to avoid the overload of the vehicle is the interval [$b_{max}$, $a_{max}$], which is calculated according to the following system:

$$\begin{cases} a_{\max} = \dfrac{V_{\max}^{a}\,(a+b)}{F} \\[2mm] b_{\max} = \dfrac{V_{\max}^{b}\,(a+b)}{F} \end{cases}$$

where F is the overall weight of the vehicle with a full load, $V_{\max}^{a}$ is the maximum admissible load for the axle A, $V_{\max}^{b}$ is the maximum admissible load for the axle B and $\underline{a}$ and $\underline{b}$ are respectively the distance Xc from the axle A and from the axle B.

In said method there may be a further stage in which the driver is alerted of the overload of the vehicle.

In said method there may be a further stage in which the overload state and the time in which it remains in overload may be stored in specially provided storage means accessible to an authorized repairer.

Typically the vehicles with more than two axles present two or more axles next to each other. The model of the beam put on two trolleys remains effective provided that each constraining reaction is considered to be the vectorial sum of the constraining reactions given by the single axles next to each other, this force being applied to the barycenter of the each single axle that has contributed to the vectorial sum.

A device for detecting the overload of a vehicle, according to the method that is the object of the invention, comprises:

- storage means 1 of at least a pair of values defining a finite interval;
- signalling means 2 for the driver;
- elaboration means 3 with the function of:

    a. calculating the position Xc of the barycenter of a vehicle with two axles A and B along the longitudinal axis of the vehicle itself;
    b. comparing said value of Xc with said finite interval, and
    c. activating said signalling means for the driver, when Xc falls outside the interval. Further on, said device may comprise storage means, accessible to an authorized repairer, which may correspond with said storage means 1, in which the overloading events and the time in which a vehicle remains in an overload state may be stored.

Means for the calculation of the position Xc of the barycenter of a vehicle are already known and comprise a system usually called ESP (Electronic Stability Program). For this reason, in a preferred embodiment of the device, said elaboration means 3 comprise said ESP system and further means with the function of:

    b. comparing said value of Xc with said finite interval, and
    c. activating said signalling means for the driver, when Xc falls outside the interval. The advantage is that the driver of a vehicle equipped with said device for detecting the overload has the possibility to reduce the load of the vehicle before damaging the vehicle itself and/or getting getting a fine from the police.

The advantage is also that the manufacturer of a vehicle equipped with said device for detecting the overload has the possibility to verify an illegitimate use of the vehicle sold.

The particular embodiments described here do not limit the scope of this invention which covers all the alternative embodiments defined by the claims.

**Claims**

1. Method for detecting the overload condition in a vehicle, in particular a commercial or industrial vehicle, comprising the following steps:

    - definition of a finite interval of values within which the position of the barycenter of a vehicle has to fall along its longitudinal axis, in various admissible load conditions;
    - detection of the position Xc of the barycenter along the longitudinal axis;
    - if Xc falls within said interval, the vehicle is not overloaded, otherwise the vehicle is overloaded.

**2.** Method according to claim 1, in which said finite interval of values, to which said position Xc has to belong in order to avoid the overload of the vehicle, is empirically calculated making experiments of admissible loading of the vehicle.

**3.** Method according to claim 1, in which said vehicle comprises two or more axles, and in which said finite interval of value to which said position Xc has to belong in order to avoid the overload of said vehicle with two axles A and B, is the interval [$b_{max}$, $a_{max}$] calculated according to the following system of equations:

$$\begin{cases} a_{max} = \dfrac{V_{max}^{a}\,(a+b)}{F} \\[2ex] b_{max} = \dfrac{V_{max}^{b}\,(a+b)}{F} \end{cases}$$

where F is the overall weight of the vehicle with a full load, $V_{max}^{a}$ is the maximum admissible load for the axle A, $V_{max}^{b}$ is the maximum admissible load for the axle B and <u>a</u> and <u>b</u> are respectively the distance of said position Xc from the axle A and from the axle B.

**4.** Method according to claim 3, in which said vehicle comprising two or more axles is treated as a vehicle with only two axles by adding up the constraining reactions of the single close up axle.

**5.** Method according to claim 1, comprising also a subsequent stage of alert for the overload state of the vehicle.

**6.** Method according to claim 1, comprising also a subsequent stage in which the overload state and the time in which the vehicle remains in an overload state may be stored in specially provided storage means, accessible from the outside of the vehicle.

**7.** Device for detecting the overload condition of a vehicle comprising:

- storage means (1) of at least a pair of values defining a finite interval;
- signalling means (2) of the overload condition;
- processing means (3) with the function of:

 a. calculating the position Xc of the barycenter of a vehicle with two or more axles along the longitudinal axis of the vehicle itself;
 b. comparing said value of Xc with said finite interval, and
 c. activating said signalling means (2), when said position Xc falls outside said finite interval.

**8.** Device according to claim 7, in which said finite interval of values to which said position Xc has to belong in order to avoid the overload of said vehicle, treated as a vehicle with two axles A and B, is the interval [$b_{max}$, $a_{max}$] calculated according to the following system of equations:

$$\begin{cases} a_{max} = \dfrac{V_{max}^{a}\,(a+b)}{F} \\[2ex] b_{max} = \dfrac{V_{max}^{b}\,(a+b)}{F} \end{cases}$$

where F is the overall weight of the vehicle with a full load, $V_{max}^{a}$ is the maximum admissible load for the axle A, $V_{max}^{b}$ is the maximum admissible load for the axle B and <u>a</u> and <u>b</u> are respectively the distance Xc from the axle A and from the axle B.

9. Device according to claim 7, in which said elaboration means (3) have also the function to store the overload state and the time in which the vehicle remains in an overload state in said storage means, accessible from the outside of the vehicle.

10. Device according to claim 7, in which said processing means (3) comprise a control unit defining an ESP security system.

11. Vehicle including a device for detecting the overload condition as in any of the claims from 7 to 10.

**Fig. 1**

**Fig. 2**

**European Patent Office**

**EUROPEAN SEARCH REPORT**

Application Number

EP 07 42 5757

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 167 094 A (CONTINENTAL AG [DE]) 2 January 2002 (2002-01-02) * paragraph [0006] - paragraph [0007] * * paragraph [0011] - paragraph [0015] * * paragraph [0027] - paragraph [0046] * * figures 1,2 * | 1-11 | INV. G01G19/08 G01M1/12 |
| X | GB 2 191 868 A (ARCUBOS SYSTEMS LIMITED ARCUBOS SYSTEMS LIMITED [GB]) 23 December 1987 (1987-12-23) * page 1, line 79 - page 2, line 2 * * page 2, line 84 - line 113 * * page 3, line 75 - page 4, line 56 * * figures 1,3,5 * | 1-11 | |
| X | GB 2 424 961 A (PM GROUP PLC [GB]) 11 October 2006 (2006-10-11) * the whole document * | 1-11 | |
| X | ANONYMOUS: "Centre of gravity indicator for load vehicles" RESEARCH DISCLOSURE, MASON PUBLICATIONS, HAMPSHIRE, GB, vol. 203, no. 14, March 1981 (1981-03), XP007107735 ISSN: 0374-4353 * the whole document * | 1-11 | TECHNICAL FIELDS SEARCHED (IPC) G01G |
| A | WO 2006/043872 A (VOLVO LASTVAGNAR AB [SE]; REGNELL HANS [SE]; LILJEBLAD BENNY [SE] VOLV) 27 April 2006 (2006-04-27) * paragraph [0008] - paragraph [0024] * * figures 6-10 * | 1-11 | |
| A | GB 1 240 890 A (VDO LUFTFAHRTGERATE WERK ADOLF [DE]) 28 July 1971 (1971-07-28) * the whole document * | 1,3,7,8 | |

The present search report has been drawn up for all claims

| Place of search | Date of completion of the search | Examiner |
|---|---|---|
| The Hague | 29 April 2008 | Koch, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 42 5757

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2008

| Patent document cited in search report | | Publication date | Patent family member(s) | | Publication date |
|---|---|---|---|---|---|
| EP 1167094 | A | 02-01-2002 | DE | 10029332 A1 | 17-01-2002 |
| | | | JP | 2002054983 A | 20-02-2002 |
| | | | US | 2002038193 A1 | 28-03-2002 |
| GB 2191868 | A | 23-12-1987 | NONE | | |
| GB 2424961 | A | 11-10-2006 | WO | 2006106296 A1 | 12-10-2006 |
| WO 2006043872 | A | 27-04-2006 | CN | 101056773 A | 17-10-2007 |
| | | | EP | 1812254 A1 | 01-08-2007 |
| | | | SE | 529962 C2 | 15-01-2008 |
| | | | SE | 0402543 A | 19-04-2006 |
| | | | US | 2007296173 A1 | 27-12-2007 |
| GB 1240890 | A | 28-07-1971 | DE | 1506121 A1 | 04-06-1969 |
| | | | FR | 1594242 A | 01-06-1970 |

EPO FORM P0459

For more details about this annex : see Official Journal of the European Patent Office, No. 12/82